Europäisches Patentamt

European Patent Office

Office européen des brevets

(11) Veröffentlichungsnummer: **0 009 731**
**B1**

(12) **EUROPÄISCHE PATENTSCHRIFT**

(45) Veröffentlichungstag der Patentschrift :
03.02.82

(21) Anmeldenummer : 79103570.2

(22) Anmeldetag : 21.09.79

(51) Int. Cl.³ : **C 08 F220/12, C 08 F218/00** //
(C08F220/12, 218/00,
220/42),(C08F218/00, 220/12,
220/42)

(54) **Terpolymerisate aus Acrylsäureester, Vinylester und ungesättigten Nitrilen sowie deren Herstellung.**

(30) Priorität : 03.10.78 DE 2843041

(43) Veröffentlichungstag der Anmeldung :
16.04.80 (Patentblatt 80/08)

(45) Bekanntmachung des Hinweises auf die Patenterteilung : 03.02.82 Patentblatt 82/05

(84) Benannte Vertragsstaaten :
**BE DE FR GB IT NL**

(56) Entgegenhaltungen :
**DE - B - 1 151 661**
**FR - A - 1 036 723**

(73) Patentinhaber : **BAYER AG**
**Zentralbereich Patente, Marken und Lizenzen**
**D-5090 Leverkusen 1, Bayerwerk (DE)**

(72) Erfinder : **Oppelt, Dieter, Dr.**
**Hardenbergstrasse 48**
**D-5090 Leverkusen (DE)**
Erfinder : **Thörmer, Joachim, Dr.**
**Emil-Nolde-Strasse 39**
**D-5090 Leverkusen (DE)**
Erfinder : **Szentivanyi, Zsolt, Dr.**
**Carl-Rumpff-Strasse 9**
**D-5090 Leverkusen 1 (DE)**
Erfinder : **Stollfuss, Bernd**
**Am Katterbach 76**
**D-5060 Bergisch-Gladbach 2 (DE)**

Imprimerie Jouve, 18, rue St-Denis, 75001 Paris, France

Terpolymerisate aus Acrylsäureester, Vinylester und ungesättigten Nitrilen sowie deren Herstellung

Gegenstand der Erfindung sind peroxidisch vernetzbare Terpolymere aus Acrylsäureester, Vinylester und ungesättigten Nitrilen, die eine Mooney-Viskosität von mindestens 40 (ML-4'/100 °C) besitzen, deren Vulkanisate ohne Nachtempern eine Reißfestigkeit von über 9,0 MPa bei einer Dehnung von über 180 % aufweisen und die ohne Nachtempern einen Druckverformungsrest (70 h/150 °C) von unter 35 % haben. Weiterhin besitzen sie eine Härtedifferenz (Shore A) zwischen 20 °C und 70 °C von weniger als 14 Punkten. Die Terpolymere bestehen aus zwei Phasen. Der Glastemperaturpunkt der einen Phase liegt unter 268 °K.

Die Copolymerisation von Butylacrylat und Vinylacetat in Emulsionen oder in Suspensionen ist bekannt. Nach unserer Kenntnis enthalten diese Polymere 2 miteinander unverträgliche Polymerphasen, die durch zwei verschiedene Glaspunkte gekennzeichnet sind (Encyclopedia of Polymer Science and Technology Band 1, S. 272, Interscience Publishers). Die eine Polymerphase besteht nach Lage des Glaspunktes aus reinem Polyvinylacetat.

Solche miteinander unverträglichen Kautschuk-Kunststoff-Zweiphasensysteme sind für die Herstellung von Gummiartikeln ungeeignet, da sie nur unzureichende Elastomer-Eigenschaften besitzen.

Sie werden üblicherweise in Dispersionen als Lacke, Papierstreichmittel oder mit anderen Monomeren als Binder oder Dispersionsklebstoffe angeboten.

Weiterhin ist es bekannt, durch Polymerisation von geeigneten Acrylsäureestern quell- und hitzebeständige Elastomere herzustellen, wobei die Vernetzung durch Einbau eines geeigneten Comonomeren erfolgt. (Encyclopedia of Polymer Science and Technology Band 1, S. 228, Interscience Publishers). In der Regel handelt es sich hierbei um Verbindungen, die ein aktiviertes Chloratom enthalten, das beweglich genug ist, um eine Vernetzungsreaktion zwischen den Elastomerketten herbeizuführen. Solche Vernetzungsmechanismen benötigen allerdings für die meisten Anwendungen ein sogenanntes Nachtempern.

Für viele Anwendungen ist jedoch das Nachtempern von Vulkanisaten außerordentlich hinderlich und sehr kostenaufwendig. Will man Vernetzungsmechanismen anwenden, die das Nachtempern nicht benötigen, muß man auf die bekannten Vulkanisationsarten wie die Schwefelvernetzung oder die radikalische Vernetzung zurückgreifen, wobei letztere durch Peroxide als auch durch energiereiche Strahlungen initiiert werden kann.

Die radikalische Vernetzung sowohl von Homopolymerisaten der Acrylsäureester als auch von Copolymerisaten unterschiedlicher Acrylsäureester ergibt jedoch Vulkanisate, deren mechanische Eigenschaften für die Praxis nicht ausreichend sind. Vor allem sind die Druckverformungsreste dieser Vulkanisate zu hoch, so daß Einsatzgebiete, in denen diese Eigenschaften besonders gefordert werden, nicht in Betracht kommen können. Außerdem ist die Quellbeständigkeit solcher nicht optimal vernetzbarer Vulkanisate mäßig. In gleicher Weise läßt auch die Hitzebeständigkeit zu wünschen übrig. Eine Verbesserung läßt sich fallweise durch Nachtempern erzielen, ist jedoch aufwendig und bei vielen Artikeln nicht machbar.

Die US-PS 2 520 083 beschreibt auf Spalte 2, Zeilen 26-28 ein Terpolymerisat aus 5-30 % Acrylnitril, 50-75 % Vinylacetat und 20-50 % Butylacrylat. Auf Spalte 1, Zeilen 8-19 wird bezüglich seiner Eigenschaften ausgesagt, daß Zugfestigkeit, Dehnung und Härte so ungewöhnlich sind, daß ein hergestellter Film sich als nicht einsetzbar erweist.

Die durchgeführten Nacharbeitungen der Beispiele 1 und 2 der US-PS zeigen auf, daß das Vulkanisat des beschriebenen Produktes typisch thermoplastische und elastomere Eigenschaften besitzt. So beträgt die Dehnung nur 30 bzw. 50 % ; die Härtedifferenz (Shore A) zwischen 20 und 70 °C 45 bzw. 53 Punkte ; der Druckverformungsrest 150 bzw. 157 %.

Aufgabe der Erfindung ist es, Terpolymere aus Acrylsäureester, Vinylester und ungesättigten Nitrilen bereitzustellen, die die eingangs geschilderten Nachteile nicht aufweisen.

Gegenstand der Erfindung sind somit Terpolymerisate aus maximal 85 Gew.-%, bevorzugt 60 bis 80 Gew.-% Acrylsäureester, 12 bis 34 Gew.-% Vinylester und 0,5 bis 12 Gew.-%, bevorzugt 3 bis 6 Gew.-% ungesättigter Nitrile, wobei die Nitrile in solchen Mengen vorhanden sind, daß sich die Summe der Komponenten auf 100 addiert.

Als Acrylsäureester seien beispielsweise genannt : Acrylsäureester mit 2-8 C-Atomen in der Alkoholkomponente wie Acrylsäureäthyl, -propyl, -butyl, -hexyl, -2-äthylhexylester, bevorzugt Acrylsäurebutylester.

Als Vinylester seien beispielsweise aufgeführt : Vinylester mit 1 bis 4 C-Atomen in der Acylkette, wie Vinylacetat, -propionat, -butyrat, bevorzugt Vinylacetat.

Als ungesättigte Nitrile seien beispielsweise genannt : Acrylnitrile, die durch eine Methylgruppe oder ein Chloratom substituiert sein können, wie Methacrylnitril, Acrylnitril, 2-Chloracrylnitril, bevorzugt Acrylnitril.

Ein weiterer Gegenstand der Erfindung ist ein Verfahren zur Herstellung der Terpolymerisate, das dadurch gekennzeichnet ist, daß man 40 bis 75 Gew.-Teile eine Acrylsäureesters, 20 bis 55 Gew.-Teile eines Vinylesters und 0,5 bis 9 Gew.-Teile eines ungesättigten Nitrils in wäßriger Suspension oder Emulsion in Gegenwart eines monomerlöslichen und/oder wasserlöslichen Polymerisationsinitiators bei Temperaturen von 0 bis 60 °C, bevorzugt von 10 bis 50 °C, bis zu einem Umsatz von 90 %, bevorzugt bis zu einem Umsatz von 80 %, polymerisiert.

Die einsetzbaren Suspensions- und Emulgiermittel sowie die verwendbaren Polymerisationsinitiatoren sind allgemein bekannt.

Als Suspensionsmittel sei beispielsweise angegeben : Carboxymethylcellulose oder Methylcellulose.

Als Emulgiermittel sei beispielsweise genannt : Alkylsulfonate, höherkettige Alkylsulfate, Alkyltauride, Alkylsarkoside.

Als Polymerisationsinitiator werden folgende Verbindungen beispielsweise aufgeführt :

Radikalbildner wie Azoverbindungen oder anorganisch und/oder organische Peroxide wie Kalium-Persulfat, Cumolhydroperoxid, Wasserstoffperoxid. Die Peroxide können auch in Verbindung mit Reduktionsmittel wie Triethanolamin eingesetzt werden.

Die erfindungsgemäßen Terpolymerisate lassen sich gut peroxidisch oder durch energiereiche Strahlung vernetzen. Geeignete Peroxide sind solche, die sich in einem Temperaturbereich von 150 bis 220 °C zersetzen, wie z.B. Tertiärbutylperbenzoat, Dicumylperoxid, 2,5-bis-(t-Butylperoxy)-2,5-di-methylhexan oder $\alpha,\alpha$-bis-(t-Butylperoxy)-diisopropylbenzol.

Abhängig vom Wirkungsgrad des Peroxides können die Verbindungen in Mengen von 2 bis 8 g, bevorzugt von 3 bis 6 g pro 100 g Polymer eingesetzt werden.

Als energiereiche Strahlung geeignet sind alle Formen ionisierender Strahlung wie z.B. $\gamma$-Strahlen, Röntgenstrahlen, ß-Strahlung, Protonen-Neutronenstrahlung, $\alpha$-Teilchen. Bevorzugt wird die Strahlung eines 2-MEV-von-der-Graaf Elektronenbeschleunigers angewendet.

Um geeignete Vulkanisate zu erhalten, müssen den Polymeren aktive Füllstoffe zugemischt werden. Es lassen sich auch gewisse halbaktive Füllstoffe verwenden, jedoch ist das Einsatzgebiet der Vulkanisate dann sehr eingeengt, da die mechanischen Eigenschaften mit halbaktiven Füllstoffen nicht ausreichend sind. Für einen mittleren Härtegrad genügen z.B. 50 bis 60 Teile eines FEF-Rußes. Um einen guten und optimalen Vernetzungsgrad zu erhalten, werden den Kautschukmischungen sogenannte Koagenzien zugesetzt, die die Vernetzung in Verbindung mit Radikalbildnern wie Peroxiden oder energiereichen Strahlen verbessern. Als günstig hat sich vor allem Triallylcyanurat erwiesen. Es können aber auch bis- oder trifunktionelle ungesättigte Verbindungen in Form von Estern oder Äthern mehrwertiger Alkohole eingesetzt werden, wie sie im Handel zu diesem Zwecke angeboten werden. Bei der Mischungsherstellung vermeidet man ein Kleben des Materials auf der Walze oder im Innenmischer durch Zugabe von beispielsweise Polyäthylenwachsen, Stearinsäure oder Zinkstearat.

Schließlich werden zur Verbesserung der Heißluftbeständigkeit beispielsweise Alterungsschutzmittel in Form von sterisch gehinderten Phenolen, polymerisierten 2,2,4-Trimethyl-1,2-dihydrochinolin, substituierten Diphenylaminen oder Phosphor-Verbindungen wie tris-Nonylphenyl-phosphit und Polycarbodiimide eingesetzt. Ein optimal auf Heißluftalterung eingestelltes Vulkanisat sollte ca. 0,1 bis 1,5 Teile der genannten Antioxidantien und 4 Teile Polycarbodiimid auf 100 Teile Polymer enthalten.

Die mechanischen Eingenschaften der vernetzten Terpolymerisate wurden wie folgt gemessen :

Mooney-Wert des Polymeren : DIN 53 523

Reißfestigkeit : DIN 53 504 (Normring 1)

Dehnung : DIN 53 504 (Normring 1)

Druckverformungsrest : ASTM D 395, Methode B

Härte : DIN 53 505

Glastemperatur : TMA

Die Beispiele 1-4 beschreiben die Herstellung der Terpolymerisate.

Beispiel 1

In einen 40 l Autoklav werden vorgelegt (unter Stickstoff) :

22,0 kg destilliertes Wasser ;
0,022 kg Carboxymethylcellulose ;
6,110 kg Acrylsäurebutylester ;
4,450 kg Vinylacetat ;
0,440 kg Acrylnitril ;
0,022 kg Azodiisobuttersäurenitril.

Anschließend wird der Kessel auf 45 °C aufgeheizt (der Rührer auf 200 Upm eingestellt) und 40 Stunden polymerisiert ; danach das Polymer filtriert, gewaschen und getrocknet. Ausbeute $\sim$ 82 %, Mooney (ML-4/100 °C) = 52, $N_2$-Gehalt (Kjeldahl) : 1,22 = 4,6 % ACN, $T_{g1}/T_{g2}$ = $-$ 20 °C/28 °C Gelgehalt in Toluol (Ultrazentrifuge) : $<$ 1 %.

Beispiel 2 (Vergleich)

In einem 40 l Autoklav werden vorgelegt (unter Stickstoff) :

22,0 kg destilliertes Wasser ;
0,022 kg Carboxymethylcellulose ;
6,368 kg Acrylsäurebutylester ;
4,211 kg Vinylacetat ;
0,022 kg Azodiisobuttersäurenitril.

Anschließend wie Beispiel 1. Ausbeute : 80 %, Mooney (ML-4/100 °C) = 42 ; $T_{g1}/T_{g2}$ = – 27 °C/22 °C Gelgehalt in Toluol (Ultrazentrifuge) : 4,9 %.

Beispiel 3 (Vergleich)

In einem 40 l Polymerisationskessel werden unter $N_2$-Atmosphäre vorgelegt :

20,0 kg destilliertes Wasser ;
0,5 kg Alkylsulfonat (Paraffinkette $C_{10}$-$C_{15}$) ;
0,6 kg Butylacrylat ;
0,4 kg Vinylacetat ;
0,1 kg 1 n NaOH ;
0,051 kg $K_2S_2O_8$ ;
0,04 kg Triäthanolamin.

Die Temperatur wird auf 10 °C eingestellt. Nach 15 Minuten werden gleichmäßig innerhalb 3 Stunden zudosiert.
5,4 kg Butylacrylat,
3,6 kg Vinylacetat.

Wenn das gesamte Monomer zudosiert ist, wird 1 Stunde nachgerührt und mit Hydrochinon abgestoppt, entgast und mit Kochsalzlösung gefällt.
Ausbeute : 60 % .Mooney (MI-4/100 °C) = 29 ; $T_{g1}/T_{g2}$ = – 27 °C/+ 30 °C
Gelgehalt in Toluol (Ultrazentrifuge) : < 1 %.

Beispiel 4

In einem 40 l Polymerisationskessel werden unter $N_2$-Atmosphäre vorgelegt

20,00 kg destilliertes Wasser
0,50 kg Alkylsulfonat (Paraffinkette $C_{10}$-$C_{15}$)
0,10 kg 1 n NaOH
0,60 kg Acrylsäurebutylester
0,35 kg Vinylacetat
0,05 kg Acrylnitril
0,04 kg $K_2S_2O_8$ (in 1,96 kg dest. Wasser)
0,08 kg Triäthanolamin (in 0,92 kg dest. Wasser).

Die Temperatur wird auf 12 °C eingestellt und nach 5 Minuten wird gleichmäßig innerhalb von 3 Stunden zudosiert :

5,40 kg Acrylsäurebutylester
3,15 kg Vinylacetat
0,45 kg Acrylnitril.

Sobald das gesamte Monomer zudosiert ist, wird mit Natriumdithionit abgestoppt, entgast und mit Kochsalzlösung gefällt.
Ausbeute : 70 %, Mooney (ML-4/100 °C) = 46, $N_2$-Gehalt
(Kjeldahl) : 1,36 = 5,2 % Acrylnitril : $T_{g1}/T_{g2}$ = – 16 °C/28 °C.
Gelgehalt in Toluol (Ultrazentrifuge) : < 1 %.
Die in der Tabelle aufgeführten Vulkanisate enthalten auf 100 Teile Polymerisat 1 Teil Stearinsäure, 50 Teile FEF-Ruß, 1 Teil styrolisiertes Diphenylamin, 4 Teile Polycarbodiimid, 3 Teile Triallylcyanurat und 4,5 Teile 1,3-bis-(t-Butylperoxy)-diisopropylbenzol.
Die Messung der mechanischen Werte erfolgte an DIN-Klappen von 4 mm Stärke, die bei 170 °C in 20 Min. vulkanisiert wurden. Die Probekörper wurden nicht getempert.

4

Vulkanisat-Eigenschaften

| | 1 | 2 | 3 | 4 |
|---|---|---|---|---|
| Suspension-Polymerisat nach Beispiel | 1 | 2 | | |
| Emulsions-Polymerisat nach Beispiel | | | 3 | 4 |
| Zugfestigkeit DIN 53 504 [MPa] | 9,4 | 8,8 | 9,0 | 9,2 |
| Bruchdehnung DIN 53 504 [%] | 230 | 100 | 190 | 220 |
| Shore-Härte [Shore A] bei 20 °C | 65 | 83 | 58 | 65 |
| bei 70 °C | 52 | 59 | 52 | 56 |
| Druckverformungsrest nach ASTM D 395, Methode B 70 h 150 °C [%] | 32,2 | 26,7 | 47,3 | 33,7 |
| Heißluftalterung 10 d bei 170 °C: | | | | |
| Zugfestigkeit [MPa] | 10,6 | 9,6 | 7,5 | 10,0 |
| Bruchdehnung [%] | 140 | 60 | 140 | 160 |
| Shore-Härte [Shore-A] | 83 | 87 | 72 | 81 |
| Öl-Alterung 7 d ASTM-Öl II bis 150 °C: | | | | |
| Zugfestigkeit [MPa] | 9,2 | 7,3 | 6,5 | 7,8 |
| Bruchdehnung [%] | 240 | 105 | 190 | 235 |
| Shore-Härte [Shore-A] | 56 | 73 | 43 | 56 |

## Ansprüche

1. Terpolymerisat bestehend aus maximal 85 Gew.-% Acrylsäureester, 12 bis 34 Gew.-% Vinylester und 0,5 bis 12 Gew.-% ungesättigter Nitrile mit einer Mooney-Viskosität von mindestens 40 (ML - 4'/100 °C), wobei dessen Vulkanisat ohne Nachtempern eine Reißfestigkeit von über 9,0 MPa bei einer Dehnung von über 180 % und einen Druckverformungsrest (70 h/150 °C) von unter 35 % sowie eine Härtedifferenz (Shore A) zwischen 20 und 70 °C von weniger als 14 Punkten besitzt.

2. Terpolymerisat gemäß Anspruch 1 enthaltend 60 bis 80 Gew.-% Acrylsäureester und 3 bis 6 Gew.-% ungesättigter Nitrile.

3. Verfahren zur Herstellung der Polymerisate gemäß Anspruch 1, dadurch gekennzeichnet, daß man 40 bis 75 Gew.-Teile eines Acrylsäureesters, 20 bis 55 Gew.-Teile eines Vinylesters und 0,5 bis 9 Gew.-Tln. eines ungesättigten Nitrils in wäßriger Suspension oder Emulsion in Gegenwart eines monomer- oder wasserlöslichen Polymerisationsinitiators bei Temperaturen von 0 bis 60 °C bis zu einem Umsatz von 90 % polymerisiert.

4. Verfahren nach Anspruch 3, dadurch gekennzeichnet, daß man die Polymerisation bei Temperaturen von 10 bis 50 °C durchführt.

5. Verfahren nach Anspruch 3, dadurch gekennzeichnet, daß man bis zu einem Umsatz von 80 % polymerisiert.

## Claims

1. Terpolymer consisting of a most 85 % by weight of an acrylic acid ester, 12 to 34 % by weight of a vinyl ester and 0.5 to 12 % by weight of unsaturated nitriles with a Mooney viscosity of at least 40 (ML-4'/100 °C), the vulcanisation product thereof having, without being after-heated, a tensile strength of greater than 9.0 MPa, at an elongation of over 180 %, and a residual compression (70 H/150 °C) of less than 35 %, as well as a hardness difference (Shore A) between 20 and 70 °C of less than 14 points.

2. Terpolymer according to Claim 1, containing 60 to 80 % by weight of an acrylic acid ester and 3 to 6 % by weight of unsaturated nitriles.

3. Process for the preparation of the polymers according to Claim 1, characterised in that 40 to 75 parts by weight of an acrylic acid ester, 20 to 55 parts by weight of a vinyl ester and 0.5 to 9 parts by weight of an unsaturated nitrile are polymerised in aqueous suspension or emulsion in the presence of a monomer-soluble or water-soluble polymerisation initiator at temperatures from 0 to 60 °C, up to a conversion of 90 %.

4. Process according to Claim 3, characterised in that the polymerisation is carried out at temperatures from 10 to 50 °C.

5. Process according to Claim 3, characterised in that the polymerisation is carried out up to a conversion of 80 %.

**Revendications**

1. Terpolymère consistant en maximum 85 % en poids d'esters d'acide acrylique, 12 à 34 % en poids d'esters vinyliques et 0,5 à 12 % en poids de nitriles insaturés avec une dureté Mooney d'au moins 40 (ML-4'/100 °C), dont le vulcanisat, sans post-traitement thermique, possède une résistance au déchirement supérieure à 9,0 MPa pour un allongement supérieur à 180 % et une déformation résiduelle à la pression (70 heures/150 °C) inférieure à 35 % ainsi qu'une différence de dureté (Shore A) entre 20 et 70 °C inférieure à 14 points.

2. Terpolymère selon la revendication 1, contenant 60 à 80 % en poids d'esters d'acide acrylique et 3 à 6 % en poids de nitriles insaturés.

3. Procédé de fabrication des polymères selon la revendication 1, caractérisé en ce qu'on polymérise 40 à 75 parties en poids d'un ester d'acide acrylique, 20 à 55 parties en poids d'un ester vinylique et 0,5 à 9 parties en poids d'un nitrile insaturé en suspension ou émulsion aqueuse, en présence d'un initiateur de polymérisation soluble dans les monomères ou dans l'eau, à des températures de 0 à 60 °C, jusqu'à une conversion de 90 %.

4. Procédé selon la revendication 3, caractérisé en ce qu'on exécute la polymérisation à des températures de 10 à 50 °C.

5. Procédé selon la revendication 3, caractérisé en ce qu'on polymérise jusqu'à une conversion de 80 %.